# EUROPEAN PATENT APPLICATION

(11) **EP 4 760 921 A1**
(43) Date of publication of application: **17.06.2026**
(21) Application number: 24887304.4
(22) Date of filing: 07.05.2024
(51) Int. Cl.: H01M 50/244

(54) **CASE, BATTERY, AND ELECTRIC DEVICE**

(30) Priority: 07.11.2023 CN 202311476012
(71) Applicant: Contemporary Amperex Technology Co., Limited, Ningde, Fujian 352100 (CN)
(72) Inventor: YANG, Hui, Ningde, Fujian 352100 (CN); WANG, Qing, Ningde, Fujian 352100 (CN); WANG, Yong, Ningde, Fujian 352100 (CN)
(74) Representative: Gong, Jinping
(86) International application number: PCT/CN2024/091379
(87) International publication number: WO 2025/097680

(57) **Abstract**

The present application provides a case (10), a battery (100), and an electric device. A bottom plate (101) of the case (10) comprises a composite plate (1011) and a heat exchange plate (1012); the composite plate (1011) comprises a first material portion (10111) formed of a first material and a second material portion (10112) formed of a second material; a first welding surface (1011a) is formed on a part of the surface of the composite plate (1011); the first welding surface (1011a) is formed of the first material portion (10111); a second welding surface (1012a) is formed on a part of the surface of the heat exchange plate (1012); the heat exchange plate (1012) at the second welding surface (1012a) is formed of a third material; the third material and the first material are the same material; and the first welding surface (1011a) is welded to the second welding surface (1012a). According to the case (10) provided in the embodiments of the present application, an aluminum plate is replaced with the composite plate (1011), such that the problem of the quality of the case (10) being affected due to the heat exchange plate (1012) being difficult to weld can be effectively mitigated.

## Description

The present application refers to Chinese Patent Application No. 202311476012.7, filed on November 7, 2023, and entitled "CASE, BATTERY, AND ELECTRIC DEVICE", which is incorporated herein by reference in its entirety.

### TECHNICAL FIELD

The present application relates to the technical field of case structures, and in particular, to a case, a battery, and an electric device.

### BACKGROUND

With the development of power batteries, significantly reducing the cost of battery cases by changing their materials has become a development trend. However, since the heat exchange structure of the case needs to use materials with better thermal conductivity, the material of the heat exchange structure and that of the case are different. The melting points of different materials differ, making welding difficult, which may affect the overall quality of the case.

### SUMMARY

An objective of the embodiments of the present application is to provide a case, a battery, and an electric device, aiming to solve the problem in the related art that a heat exchange plate is difficult to weld and fix.

To achieve the above objective, the embodiments of the present application adopt the following technical solutions:

In a first aspect, the embodiments of the present application provide a case configured to accommodate a battery cell. The case includes a bottom plate, the bottom plate including a composite plate and a heat exchange plate, where the composite plate includes a first material portion formed of a first material and a second material portion formed of a second material, a first welding surface is formed on a part of the surface of the composite plate, and the first welding surface is formed by the first material portion; a second welding surface is formed on a part of the surface of the heat exchange plate, the heat exchange plate at the second welding surface is formed of a third material, and the third material and the first material are of a same type of material; the first welding surface is welded to the second welding surface.

The beneficial effects of the embodiments of the present application are as follows: According to the case provided in the embodiments of the present application, the bottom plate of the case includes a composite plate and a heat exchange plate. The use of a composite plate instead of an aluminum plate achieves the purpose of reducing cost. Meanwhile, the third material used for the heat exchange plate to form the second welding surface is of the same type of material as the first material used by the first material portion that forms the first welding surface of the composite plate. Therefore, the first welding surface and the second welding surface can be welded to each other, thereby achieving the purpose of fixing the heat exchange plate and the composite plate by welding, so as to improve the connection reliability of the heat exchange plate. Thus, the problem that the quality of the case is affected due to the difficulty in welding the heat exchange plate can be effectively alleviated.

In some embodiments, the first material portion includes at least one of copper alloy or aluminum alloy.

By adopting the above technical solution, the first material may include at least one of copper alloy or aluminum alloy. Copper alloy and aluminum alloy have better thermal conductivity; therefore, the heat dissipation effect of the bottom plate that includes the composite plate is better.

In some embodiments, the first material portion includes a copper alloy layer or an aluminum alloy layer.

By adopting the above technical solution, the first welding surface is formed on the surface of the copper alloy layer or the aluminum alloy layer, so that the second welding surface of the heat exchange plate can be welded to the copper alloy layer or the aluminum alloy layer.

In some embodiments, the second material includes steel alloy.

By adopting the above technical solution, the cost of steel alloy is lower than that of aluminum alloy or copper alloy. Therefore, the second material portion that includes steel alloy can effectively reduce the cost of the bottom plate, and thus reduce the cost of the case.

In some embodiments, the second material portion includes a steel alloy layer.

By adopting the above technical solution, using the steel alloy layer as a part of the layered structure of the composite plate effectively achieves the purpose of reducing the cost of the composite plate.

In some embodiments, the case further includes a frame, and the frame and the composite plate are integrally formed.

By adopting the above technical solution, the frame and the composite plate can be integrally formed; that is, the frame can also use a composite structure to replace the aluminum structure, thereby further reducing the cost of the case. Meanwhile, integrally forming the frame and the composite plate can reduce the welding procedures between the composite plate and the frame, and the integrity between the frame and the composite plate is higher. Therefore, the overall structural strength of the frame and the composite plate is better.

In some embodiments, the case further includes a frame; a third welding surface is formed on a part of the surface of the frame, the frame at the third welding surface is formed of a fourth material, and the fourth material and the first material or the second material are of a same type of material; the third welding surface is welded to the first welding surface.

By adopting the above technical solution, the composite plate and the frame can be fixedly connected by welding to improve the connection strength between the composite plate and the frame, thereby improving the quality of the case.

In some embodiments, one side of the composite plate that forms the first welding surface is recessed toward an opposite side to form a first flow guiding groove, and the heat exchange plate covers the first flow guiding groove to form a flow channel.

By adopting the above technical solution, a first flow guiding groove can be formed on the composite plate, and the first flow guiding groove is formed by recessing one side that forms the first welding surface toward the opposite side. Thus, when the heat exchange plate is welded to the first welding surface, the heat exchange plate can cover the first flow guiding groove to form a flow channel, which is used for the heat dissipation process inside the case.

In some embodiments, the one side of the composite plate that forms the first welding surface is arranged facing the battery cell.

By adopting the above technical solution, one side of the composite plate that forms the first welding surface is arranged facing the battery cell. Therefore, the first flow guiding groove, which is formed by recessing one side of the composite plate that forms the first welding surface toward the opposite side, is provided to protrude to the outside of the case. This can effectively reduce the impact of the outwardly protruding part-formed by the recess forming the first flow guiding groove-on the space inside the case for accommodating the battery cell.

In some embodiments, the heat exchange plate is recessed to form a second flow guiding groove, and the composite plate covers the second flow guiding groove to form a flow channel.

By adopting the above technical solution, the heat exchange plate can be recessed to form the second flow guiding groove. Therefore, when the heat exchange plate is welded to the first welding surface of the composite plate, the composite plate can cover the second flow guiding groove to form the flow channel for cooling, which is used for the heat dissipation process inside the case.

In some embodiments, the one side of the composite plate that forms the first welding surface is arranged facing away from the battery cell.

By adopting the above technical solution, the one side of the composite plate that forms the first welding surface is arranged facing away from the battery cell; that is, the one side of the composite plate that forms the first welding surface faces the outside of the case. The heat exchange plate, in which the second flow guiding groove is formed by recessing, is welded to the first welding surface of the composite plate outside the case to form a flow channel. Therefore, the protruding structure, which is formed by recessing the heat exchange plate to form the second flow guiding groove, is provided outside the case, which can effectively reduce the impact of the protruding structure on the space inside the case for accommodating the battery cell.

In some embodiments, the case further includes a cooling nozzle, and the cooling nozzle includes a nozzle connecting portion formed of a fifth material; the fifth material and the first material are of the same type of material, and the nozzle connecting portion is welded to the first welding surface and communicates with the flow channel.

By adopting the above technical solution, the cooling nozzle is configured to communicate with the flow channel and can introduce or discharge coolant liquid into or from the flow channel to achieve the purpose of heat exchange and cooling. The cooling nozzle can be integrally welded to the heat exchange plate, so as to optimize the welding and assembly process and reduce the manufacturing procedures of the case.

In some embodiments, the thickness of the first material portion is denoted as M, where 0.05 mm ≤ M ≤ 3 mm.

By adopting the above technical solution, the thickness of the first material portion is set to be greater than or equal to 0.05 millimeter and less than or equal to 3 millimeters, which enables the first material portion to form a certain thickness, such that the heat exchange plate and the first welding surface can be successfully welded and connected.

In some embodiments, the thickness M of the first material portion is 0.1 mm ≤ M ≤ 1.5 mm.

By adopting the above technical solution, in the case where a certain thickness is formed for the first material portion so that the first welding surface can be connected by welding, the first material portion is further optimized to be greater than or equal to 0.1 millimeter and less than or equal to 1.5 millimeters, which can further limit the thickness range of the first material portion to improve the success rate of welding the first welding surface.

In a second aspect, the embodiments of the present application further provide a battery. The battery includes a battery cell and the case described above. The battery cell is accommodated inside the case.

The beneficial effects of the embodiments of the present application are as follows: The battery provided in the embodiments of the present application includes the case described above. In the case where the case can use a composite plate to reduce costs and can weld the second welding surface of the heat exchange plate via the first welding surface, the cost of the battery is lower, and the product quality of the battery is improved.

In a third aspect, the embodiments of the present application further provide an electric device. The electric device includes the battery described above. The battery is configured to provide electric energy.

The beneficial effects of the embodiments of the present application are as follows: The electric device provided in the embodiments of the present application includes the battery described above. In the case of a lower cost of the battery, the cost of the electric device is also effectively reduced.

### BRIEF DESCRIPTION OF THE DRAWINGS

To more clearly illustrate the technical solutions in the embodiments of the present application, the drawings required for illustrating the embodiments or description of the related art are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to an embodiment of the present application;
FIG. 2 is an exploded view of a battery according to an embodiment of the present application;
FIG. 3 is a schematic structural diagram of a frame and a bottom plate according to an embodiment of the present application;
FIG. 4 is a schematic diagram of the connection between a composite plate and a heat exchange plate according to an embodiment of the present application;
FIG. 5 is a cross-sectional view of the connection between a composite plate and a heat exchange plate according to an embodiment of the present application; and
FIG. 6 is a cross-sectional view of the connection between another composite plate and a heat exchange plate according to an embodiment of the present application.

Reference numerals in the drawings have the following meanings:
1000: vehicle; 100: battery; 200: controller; 300: motor;
10: case; 11: first part; 12: second part; 20: battery cell;
101: bottom plate; 1011: composite plate; 1011a: first welding surface; 10111: first material portion; 10112: second material portion; 10113: first flow guiding groove; 1012: heat exchange plate; 1012a: second welding surface; 10121: second flow guiding groove; 1013: flow channel; 102: frame.

### DETAILED DESCRIPTION

Embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the drawings are exemplary and are intended to explain the present application. They should not be construed as limiting the present application.

In the description of the present application, it should be understood that the orientations or positional relationships indicated by the terms "length", "width", "upper", "lower", "front", "rear", "left", "right", "vertical", "horizontal", "top", "bottom", "inner", "outer", and the like are those shown based on the drawing. These terms are only intended to facilitate the description of the present application and simplify the description rather than indicate or imply that the device or element referred to must have a specific orientation or must be constructed and operated in a specific orientation, and thus, should not be construed as limiting the present application.

In addition, the terms "first" and "second" are used for description only and are not to be construed as indicating or implying relative importance or to implicitly indicate the number of technical features indicated. Therefore, a feature defined with "first" or "second" may explicitly or implicitly include one or more such features. In the description of the present application, "plurality" refers to two or more, unless otherwise explicitly and specifically defined.

In the present application, unless otherwise explicitly specified and defined, the terms "install", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the aforementioned terms in the present application can be understood according to specific conditions.

At present, judging from the trends in the market, the application of power batteries is becoming increasingly widespread. Power batteries are not only applied in energy storage power systems such as hydropower, thermal power, wind power, and solar power stations, but also widely applied in electric transportation vehicles such as electric bicycles, electric motorcycles, or electric vehicles, as well as in military equipment, aerospace, and other fields. With the continuous expansion of the application field of power batteries, the market demand for power batteries is also constantly increasing.

With the development of power batteries, how to reduce the cost of batteries has become an important development direction. In the related art, the method of replacing aluminum with steel is mainly adopted to reduce costs, that is, structures such as the bottom plate and frame of the case use steel to replace the existing aluminum material. Since the cost of the steel material is lower than that of the aluminum material, the use of steel material in the case can effectively reduce costs. However, for the heat exchange structure of the case, since the steel material has poor heat dissipation, a heat exchange structure formed of the steel material has a poor heat dissipation effect. Therefore, the heat exchange structure still needs to be integrally formed using materials with better thermal conductivity, such as aluminum or copper. However, due to the large difference in melting points between different materials, it is difficult to form a connection in the heat exchange structure by means of welding processes.

To solve the connection problem between heat exchange structures and bottom plates made of different materials, a reserved connection space can be designed for the heat exchange structure. Specifically, a connecting hole can be formed in the bottom plate, such that the heat exchange structure can be fixed to the bottom plate through the connecting hole by means of fasteners, thereby forming a connection. Alternatively, an adhesive layer may be reserved on the bottom plate, and the heat exchange structure is bonded to the bottom plate by applying the adhesive layer, thereby forming a fixed connection. However, with the above-mentioned connection method using fasteners, it is necessary to form holes in the bottom plate, which may affect the sealing performance and structural strength of the bottom plate. Alternatively, with the connection method using adhesive fixation, the heat exchange structure may fall off due to aging of the adhesive layer, which in turn affects the quality of the case.

Based on the above considerations, to solve the problem that it is difficult to weld heat exchange structures of different materials when adopting a steel case to reduce costs, a case is designed. By using a composite plate, cost reduction is achieved. Meanwhile, a first material of the composite plate forming a first welding surface and a second material of the heat exchange plate forming a second welding surface are of the same type of material. Therefore, the second welding surface of the heat exchange plate can be welded to the first welding surface of the composite plate, effectively solving the problem that the heat exchange plate is difficult to install due to the inability to weld different materials. This can alleviate the problems of increased material costs, reduced automation in case production, and adverse effects on product quality of the case, which are caused by bonding or connecting the heat exchange plate with fasteners.

The battery cell disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000 as an example of the electric device according to an embodiment of the present application.

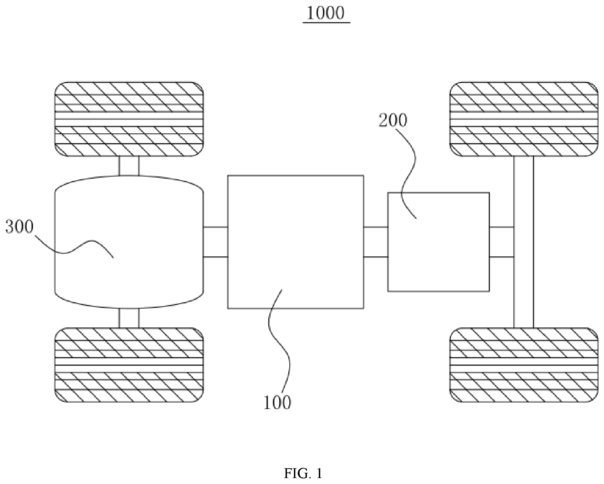

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

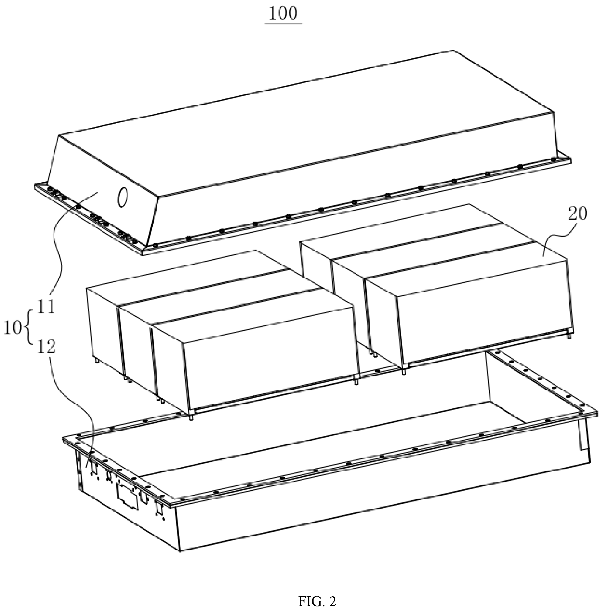

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodating space for the battery cells 20, and the case 10 may be of a variety of structures. In some embodiments, the case 10 may include a first part 11 and a second part 12. The first part 11 and the second part 12 are mutually lidded onto each other, and the first part 11 and the second part 12 jointly define an accommodating space for accommodating the battery cell 20. The second part 12 may be of a hollow structure with one end open, and the first part 11 may be of a plate-shaped structure. The first part 11 is lidded onto the open side of the second part 12, such that the first part 11 and the second part 12 jointly define the accommodating space. The first part 11 and the second part 12 may also each be of a hollow structure with one side open, and the open side of the first part 11 is lidded onto the open side of the second part 12. Certainly, the case 10 formed by the first part 11 and the second part 12 may be in various shapes, such as a cylindrical shape or a rectangular parallelepiped shape.

In the battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

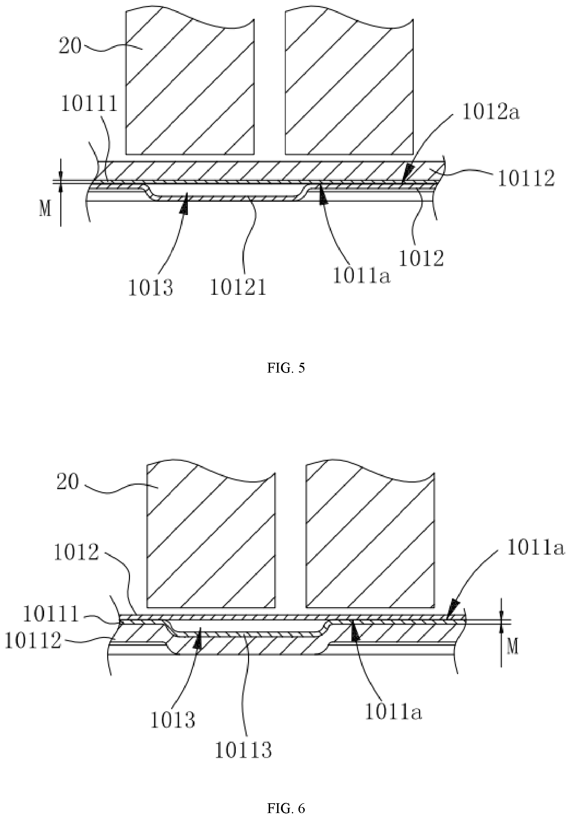

According to some embodiments of the present application and referring to FIGs. 2 to 6, in a first aspect, the embodiments of the present application provide a case 10 configured to accommodate a battery cell 20. The case 10 includes a bottom plate 101. The bottom plate 101 includes a composite plate 1011 and a heat exchange plate 1012. The composite plate 1011 includes a first material portion 10111 formed of a first material and a second material portion 10112 formed of a second material. A first welding surface 1011a is formed on a part of the surface of the composite plate 1011, and the first welding surface 1011a is formed by the first material portion. A second welding surface 1012a is formed on a part of the surface of the heat exchange plate 1012. The heat exchange plate 1012 at the second welding surface 1012a is formed of a third material, and the third material and the first material are of the same type of material. The first welding surface 1011a is welded to the second welding surface 1012a.

The case 10 may include a first part 11 and a second part 12. The first part 11 and the second part 12 are mutually lidded onto each other, and the first part 11 and the second part 12 jointly define an accommodating space for accommodating the battery cell 20.

In some embodiments, the second part 12 may be of a hollow structure with one end open, and the first part 11 may be of a plate-shaped structure. The first part 11 is lidded onto the open side of the second part 12, such that the first part 11 and the second part 12 jointly define the accommodating space. In this embodiment, the bottom plate 101 may form the first part 11, or the bottom plate 101 may also be a plate-shaped structure on any one side of the second part 12, for example, a plate-shaped structure arranged on a side opposite to the first part 11.

In other embodiments, the first part 11 and the second part 12 may also each be of a hollow structure with one side open, and the open side of the first part 11 is lidded onto the open side of the second part 12. In this embodiment, the bottom plate 101 may be a plate-shaped structure on any one side of the first part 11, for example, a plate-shaped structure arranged on a side opposite to the open side; or, the bottom plate 101 may also be a plate-shaped structure on any one side of the second part 12, for example, a plate-shaped structure arranged on a side opposite to the open side.

The bottom plate 101 is an important component of the case 10, and the bottom plate 101 can be configured to support battery cells 20 and other components. Meanwhile, the heat exchange plate 1012 on the bottom plate 101 is configured for heat exchange and heat dissipation, thereby achieving heat exchange and heat dissipation of the heat inside the case 10.

The bottom plate 101 includes a composite plate 1011 and a heat exchange plate 1012. The composite plate 1011 refers to a plate structure formed by compounding a plurality of materials. Illustratively, two or more sheets of different materials may be roll-bonded together under mechanical pressure, and two or more structural layers are bonded into an integrated body by cold pressing or hot pressing. By compounding a lower-cost material with a high-cost metallic material to form the composite plate 1011, for example, compounding a lower-cost steel alloy with a higher-cost aluminum alloy, the composite plate 1011 formed has a lower structural cost compared to using aluminum alloy alone. Therefore, the use of the composite plate 1011 can serve the purpose of cost savings.

The composite plate 1011 includes a first material portion 10111 and a second material portion 10112. The first material portion 10111 is formed of a first material, and the first material includes but is not limited to metallic materials (copper, iron, aluminum, etc.) or non-metallic materials (e.g., plastic). The first material portion 10111 may be a structural portion, such as a layer part or block part formed of the first material. Similarly, the second material portion 10112 is formed of a second material, and the second material portion 10112 includes but is not limited to metallic materials (copper, iron, aluminum, etc.) or non-metallic materials (e.g., plastic). The second material portion 10112 may be a structural portion, such as a layer part or block part formed of the second material.

Illustratively, the composite plate 1011 may be a steel-aluminum composite plate, a steel-copper composite plate, a composite plate formed by pressing plastic and copper or aluminum, or the like.

The heat exchange plate 1012 is configured to be welded with the composite plate 1011 and performs heat exchange with the composite plate 1011 so as to achieve heat dissipation and cooling of the interior of the case 10.

A second welding surface 1012a is formed on a part of the surface of the heat exchange plate 1012. Optionally, the heat exchange plate 1012 may be a plate structure made of aluminum alloy, copper alloy, or other materials with superior thermal conductivity, and a surface of the plate structure that is configured to abut against and form a weld with the first welding surface 1011a is the second welding surface 1012a. Alternatively, the heat exchange plate 1012 may be of a composite structure, for example, a composite structure formed by compounding steel and copper, steel and aluminum, or plastic and copper or aluminum.

The heat exchange plate 1012 at the second welding surface 1012a is formed of a third material, and the third material and the first material are of the same type of material. It can be understood that the third material and the first material being of the same type of material means that the main materials of the third material and the first material are identical. For example, the third material and the first material may both be aluminum alloys, regardless of the specific grade of aluminum alloy (i.e., there are differences in the metallic components or proportions within the aluminum alloy); the third material and the first material are both considered to be aluminum alloys, that is, of the same type of material. Therefore, in the case where the third material and the first material are of the same type of material, the first welding surface 1011a and the second welding surface 1012a have approximately the same melting point, so the first welding surface 1011a and the second welding surface 1012a can be connected by welding.

It should be understood that the meaning of "the same type of material" appearing below is consistent with the meaning of "the same type of material" as described here, and its definition will not be repeated in the following text.

In some specific embodiments, the first material portion 10111 may be an aluminum alloy layer body formed of aluminum alloy, the second material portion 10112 may be a steel alloy layer body formed of steel alloy, and the first welding surface 1011a is formed on the surface of the aluminum alloy layer body. The heat exchange plate 1012 is an aluminum alloy plate body, and thus, the second welding surface 1012a of the heat exchange plate 1012 is also formed of aluminum alloy. Therefore, the first welding surface 1011a and the second welding surface 1012a can be welded.

In other specific embodiments, the first material portion 10111 may be a copper alloy layer body formed of copper alloy, the second material portion 10112 may be a steel alloy layer body formed of steel alloy, and the first welding surface 1011a is formed on the surface of the copper alloy layer body. The heat exchange plate 1012 is a copper-aluminum composite plate body, the second welding surface 1012a of the heat exchange plate 1012 is formed of copper alloy, and the part of the heat exchange plate 1012 other than the second welding surface 1012a is formed of aluminum alloy. Therefore, the first welding surface 1011a and the second welding surface 1012a can be welded.

In other specific embodiments, the first material portion 10111 may be a steel alloy layer body formed of steel alloy, the second material portion 10112 may be an aluminum alloy layer body formed of aluminum alloy, and the first welding surface 1011a is formed on the surface of the steel alloy layer body. The heat exchange plate 1012 is a steel-aluminum composite plate, the second welding surface 1012a of the heat exchange plate 1012 is formed of steel alloy, and the part of the heat exchange plate 1012 other than the second welding surface 1012a is formed of aluminum alloy. Therefore, the first welding surface 1011a and the second welding surface 1012a can be welded.

According to the case 10 provided in the embodiments of the present application, the bottom plate 101 of the case 10 includes the composite plate 1011 and the heat exchange plate 1012. The composite plate 1011 replaces the aluminum plate to achieve the purpose of reducing cost. Meanwhile, the third material used for the heat exchange plate 1012 to form the second welding surface 1012a is of the same type of material as the first material used by the first material portion 10111 that forms the first welding surface 1011a of the composite plate 1011. Therefore, the first welding surface 1011a and the second welding surface 1012a can be welded to each other, thereby achieving the purpose of fixing the heat exchange plate 1012 and the composite plate 1011 by welding, so as to improve the connection reliability of the heat exchange plate 1012. Thus, the problem that the quality of the case 10 is affected due to the difficulty in welding the heat exchange plate 1012, resulting in bonding or connection using fasteners, can be effectively alleviated.

Referring to FIGs. 2 to 6, in some embodiments, the first material includes at least one of copper alloy or aluminum alloy.

It can be understood that both the copper alloy and the aluminum alloy possess relatively good thermal conductivity. Therefore, using either a copper alloy or an aluminum alloy for the first material enables the first material portion 10111 to achieve a better heat dissipation effect.

The third material of the heat exchange plate 1012 that forms the second welding surface 1012a is of the same type of material as the first material. Therefore, the heat exchange plate 1012 at the second welding surface 1012a may be aluminum alloy or copper alloy. Since the first welding surface 1011a and the second welding surface 1012a are of the same type of material-illustratively, both the first welding surface 1011a and the second welding surface 1012a are made of aluminum alloy-the first welding surface 1011a and the second welding surface 1012a have approximately the same melting point, so the first welding surface 1011a and the second welding surface 1012a can be welded.

The first material forms the first material portion 10111. Optionally, the first material portion 10111 may be a layered structure, for example, a partial layer body of the composite plate 1011, such as one or more layers of aluminum alloy layer body or copper alloy layer body. Alternatively, the first material portion 10111 may also be a block structure, for example, a local block body in any one layer of the composite plate 1011, such as a local aluminum alloy block body or a local copper alloy block body embedded in the steel alloy layer body of the composite plate 1011.

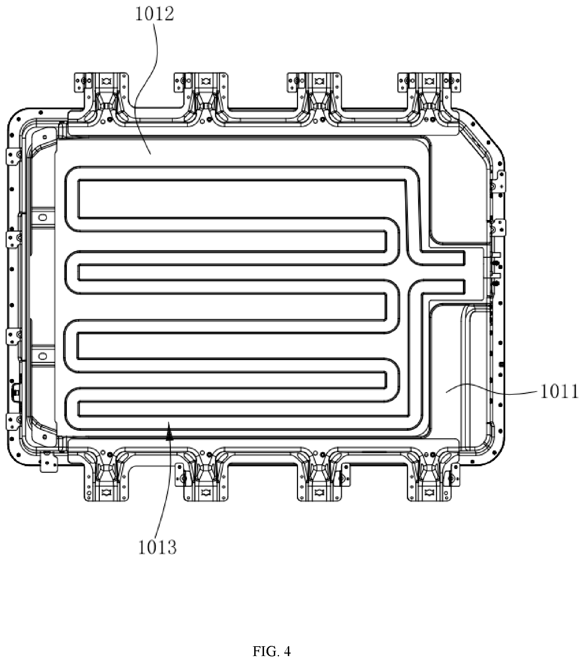

Referring to FIGs. 4 to 6, in some embodiments, the first material portion 10111 includes a copper alloy layer or an aluminum alloy layer.

It can be understood that the composite plate is formed by pressing a plurality of materials into a multilayer structure. The first material portion 10111 may be at least one of the layers. Illustratively, the composite plate 1011 may be a steel-aluminum composite plate, where the first material portion 10111 is the aluminum alloy layer in the steel-aluminum composite plate. Therefore, the first welding surface 1011a can be formed on the surface of the aluminum alloy layer, while the third material at the second welding surface 1012a of the heat exchange plate 1012 is also aluminum alloy. Therefore, the second welding surface 1012a can be welded onto the first welding surface 1011a formed by the aluminum alloy layer.

Referring to FIGs. 2 to 6, in some embodiments, the second material includes steel alloy.

It can be understood that the cost of steel alloy is lower than that of aluminum alloy or copper alloy. Therefore, by forming the composite plate 1011 with the second material portion 10112 made of steel alloy and the first material portion 10111 made of aluminum alloy or copper alloy, the cost of the composite plate 1011 is lower compared to a bottom plate 101 made of aluminum alloy or copper alloy. Thus, the bottom plate 101 that includes the composite plate 1011 can reduce the cost of the case 10.

The second material forms the second material portion 10112. Optionally, the second material portion 10112 may be a layered structure, for example, a partial layer body in the composite plate 1011, such as one or more layers of steel alloy layer body. Alternatively, the second material portion 10112 may also be a block structure, for example, a local block body in any one layer of the composite plate 1011, such as a local steel alloy block body embedded in the aluminum alloy layer body of the composite plate 1011, thereby achieving the purpose of reducing cost by using steel to replace aluminum.

Referring to FIGs. 4 to 6, in some embodiments, the second material portion 10112 includes a steel alloy layer.

It can be understood that the composite plate 1011 is formed by pressing a plurality of materials into a multilayer structure. The second material portion 10112 may be at least one of the layers. Illustratively, the composite plate 1011 may be a steel-aluminum composite plate, a steel-copper composite plate, or the like, where the second material portion 10112 is the steel alloy layer in the steel-aluminum composite plate or the steel-copper composite plate. Therefore, by forming a steel alloy layer in the composite plate 1011 to replace the use of aluminum alloy, the cost of the composite plate 1011 can be effectively reduced, thereby effectively lowering the cost of the case 10 using the composite plate 1011.

Referring to FIGs. 2 to 6, in some embodiments, the case 10 further includes a frame 102; the frame 102 and the composite plate 1011 are integrally formed.

The frame 102 may be the outer frame structure of the case 10 and possesses a certain structural strength, providing certain protection and support for components such as the battery cells 20 inside the case 10. It can be understood that the frame 102 may include two or more edge beams, and the plurality of edge beams are sequentially connected and define, in an enclosing manner, the frame part of the frame 102. Optionally, the frame 102 may be the outer frame part of the first part 11 of the case 10. Alternatively, the frame 102 may be the outer frame part of the second part 12.

It can be understood that the frame 102 and the composite plate 1011 are integrally formed, that is, the frame 102 and the composite plate 1011 can be integrally formed by stamping, without the need for other fixing procedures such as welding or bonding. Moreover, since the frame 102 and the composite plate 1011 are integrally formed by stamping, the frame 102 and the composite plate 1011 are manufactured from the same raw material plate through the stamping forming process. Therefore, the material of the frame 102 and the composite plate 1011 remains the same; that is, the frame 102 is also of a composite structure.

With such a configuration, the frame 102 and the composite plate 1011 are manufactured by an integral forming process, which can reduce welding and connecting operations between the frame 102 and the composite plate 1011, effectively improve production automation, and lower labor costs. Meanwhile, because the frame 102 and the composite plate 1011 are integrally formed by stamping, the material of the frame 102 is the same as that of the composite plate 1011; that is, the frame 102 also adopts a composite structure. Replacing the aluminum structure with a composite structure can further reduce the cost of the case 10.

Referring to FIGs. 2 to 6, in some embodiments, the case 10 further includes a frame 102. A third welding surface (not shown in the figures) is formed on a part of the surface of the frame 102. The frame 102 at the third welding surface is formed of a fourth material, and the fourth material and the first material or the second material are of the same type of material. The third welding surface is welded to the first welding surface 1011a.

It can be understood that the third welding surface is configured to contact and be welded with the first welding surface 1011a, thereby welding and fixing the composite plate 1011 to the frame 102.

In some embodiments, the fourth material and the first material are of the same type of material. Optionally, the first material may be, but is not limited to, aluminum alloy or copper alloy. Therefore, the fourth material may also be, but is not limited to, aluminum alloy or copper alloy. Illustratively, the first material portion of the composite plate 1011 that forms the first welding surface 1011a is made of aluminum alloy. Therefore, the frame 102 also forms the third welding surface from aluminum alloy material. Thus, the third welding surface of the frame 102 can be welded to the first welding surface of the composite plate 1011, so as to achieve a fixed connection between the frame 102 and the composite plate 1011.

The fourth material of the frame 102 may be provided only at the third welding surface, and parts of the frame 102 other than the third welding surface may be formed of other materials, such as steel alloy. Therefore, the frame 102 also adopts a composite structure, for example, a steel-aluminum composite structure or a steel-copper composite structure, and the third welding surface of the frame 102 is formed of the aluminum alloy in the composite structure. Alternatively, the frame 102 may be entirely formed of the fourth material. For example, the frame 102 may be an aluminum alloy frame, a copper alloy frame, or the like.

In other embodiments, the fourth material and the second material are of the same type of material. Optionally, the second material may be, but is not limited to, steel alloy or plastic. Therefore, the fourth material may also be, but is not limited to, steel alloy or plastic. Illustratively, the second material forming the second material portion 10112 of the composite plate 1011 may be steel alloy. Therefore, the third welding surface of the frame 102 is also formed of a steel alloy material. Therefore, the third welding surface of the frame 102 can be welded to the first welding surface 1011a of the composite plate 1011, so as to achieve a fixed connection between the frame 102 and the composite plate 1011.

The fourth material of the frame 102 may be provided only at the third welding surface, and parts of the frame 102 other than the third welding surface may be formed of other materials, such as aluminum alloy or copper alloy. Alternatively, the frame 102 may be entirely formed of the fourth material. For example, the frame 102 may be a steel alloy frame.

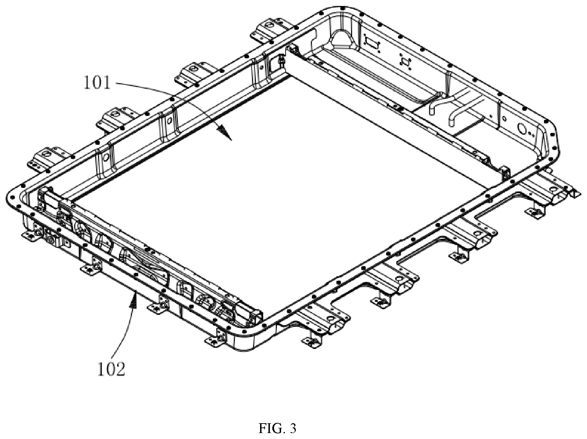

Referring to FIGs. 3, 4, and 6, in some embodiments, one side of the composite plate 1011 that forms the first welding surface 1011a is recessed toward the opposite side to form a first flow guiding groove 10113, and the heat exchange plate 1012 covers the first flow guiding groove 10113 to form a flow channel 1013.

It can be understood that the first flow guiding groove 10113 is a groove structure formed on the composite plate 1011, for example, by stamping, bending, or other methods. The number of first flow guiding grooves 10113 may be one or more. Illustratively, in the case where the number of first flow guiding grooves 10113 is one, the first flow guiding groove 10113 can wind and cover the composite plate 1011, such that after the flow channel 1013 is formed in the first flow guiding groove 10113, the flow range of the cooling medium is larger, thereby effectively improving the water cooling effect.

The first flow guiding groove 10113 is formed by recessing one side of the composite plate 1011 that forms the first welding surface 1011a toward the opposite end side, that is, on one side of the composite plate 1011 that forms the first welding surface 1011a, an inwardly recessed structure is presented, while on the opposite end side, an outwardly protruding structure is presented.

The heat exchange plate 1012 is connected to the composite plate 1011, for example, by brazing the first welding surface 1011a and the second welding surface 1012a together. In this case, the heat exchange plate 1012 covers the groove part of the first flow guiding groove 10113 to form the flow channel 1013. It can be understood that the flow channel 1013 is a relatively sealed channel structure formed by the heat exchange plate 1012 covering the first flow guiding groove 10113. The flow channel 1013 is configured to allow the cooling medium to pass through, and utilizes heat exchange of the cooling medium within the flow channel 1013 to achieve the purpose of cooling the battery cells 20 accommodated inside the case 10.

With such a configuration, one side of the composite plate 1011 that forms the first welding surface 1011a is recessed toward the opposite end side to form the first flow guiding groove 10113. Thus, when the second welding surface 1012a of the heat exchange plate is welded to the first welding surface 1011a of the composite plate 1011, the heat exchange plate 1012 can cover the first flow guiding groove 10113 to form the flow channel 1013, such that the cooling medium can pass through the flow channel 1013 to cool the interior of the case 10.

Referring to FIGs. 2 to 4 and 6, in some embodiments, one side of the composite plate 1011 that forms the first welding surface 1011a is arranged facing the battery cell 20.

It can be understood that when one side of the composite plate 1011 that forms the first welding surface 1011a is recessed toward the opposite end side to form the first flow guiding groove 10113, the one side of the composite plate 1011 that forms the first welding surface 1011a presents an inwardly recessed structure, while the opposite end side presents an outwardly protruding structure.

In this embodiment, one side of the composite plate 1011 that forms the first welding surface 1011a is arranged facing the battery cell 20, that is, the first welding surface 1011a is located on the inner side of the case 10, and the second welding surface 1012a of the heat exchange plate 1012 is welded to the first welding surface 1011a of the composite plate 1011. Therefore, the heat exchange plate 1012 is also located on the inner side of the case 10. When the cooling medium flows through the flow channel 1013, heat exchange can be performed on the battery cell 20 to achieve the purpose of cooling.

Meanwhile, between the two opposite side surfaces of the composite plate 1011, the other end side opposite to the side that forms the first welding surface 1011a faces away from the battery cell 20 and toward the outside of the case 10. Thus, the structure that protrudes outwardly due to the formation of the first flow guiding groove 10113 is also located outside the case 10.

With such a configuration, the outwardly protruding structure, which is formed by stamping the composite plate 1011 to form the first flow guiding groove 10113, can be arranged outside the case 10. Compared with the mode in which the outwardly protruding structure is arranged inside the case 10, such a configuration can effectively reduce the influence of the outwardly protruding structure on the internal space of the case 10, thereby reducing the impact on the assembly of the battery cell 20.

Referring to FIGs. 2 to 5, in some embodiments, the heat exchange plate 1012 is recessed to form a second flow guiding groove 10121, and the composite plate 1011 covers the second flow guiding groove 10121 to form a flow channel 1013.

It can be understood that the second flow guiding groove 10121 is a groove structure formed on the heat exchange plate 1012, for example, by stamping, bending, or other methods. The number of second flow guiding grooves 10121 may be one or more. Illustratively, in the case where the number of second flow guiding grooves 10121 is one, the second flow guiding groove 10121 can wind and cover the heat exchange plate 1012, such that after the flow channel 1013 is formed in the second flow guiding groove 10121, the flow range of the cooling medium is increased, thereby effectively improving the water cooling effect.

The heat exchange plate 1012 is recessed to form the second flow guiding groove 10121. Specifically, one side of the heat exchange plate 1012 that forms the second welding surface 1012a is recessed toward the opposite side. Therefore, when the second welding surface 1012a and the first welding surface 1011a are welded and fixed to each other, the composite plate 1011 can cover the second flow guiding groove 10121 to form the flow channel 1013.

With such a configuration, the second flow guiding groove 10121 can be formed on the heat exchange plate 1012, such that when the second welding surface 1012a of the heat exchange plate 1012 and the first welding surface 1011a of the composite plate 1011 are welded to each other, one side of the composite plate 1011 that forms the first welding surface 1011a can cover the second flow guiding groove 10121 to form the flow channel 1013, thereby enabling the cooling medium passing through the flow channel 1013 to perform heat exchange and cooling processing on the interior of the case 10.

Referring to FIGs. 2 to 5, in some embodiments, one side of the composite plate 1011 that forms the first welding surface 1011a is arranged facing away from the battery cell 20.

It can be understood that arranging the one side of the composite plate 1011 that forms the first welding surface 1011a to face away from the battery cell 20 means that the first welding surface 1011a is located on the outer side of the case 10.

Therefore, when the second welding surface 1012a of the heat exchange plate 1012 is welded to the first welding surface 1011a of the composite plate 1011, the heat exchange plate 1012 is also arranged on the outer side of the case 10. Thus, the outwardly protruding structure, which is formed by recessing the heat exchange plate 1012 to form the second flow guiding groove 10121, is also located outside the case 10.

With such a configuration, the outwardly protruding structure, which is formed by stamping the heat exchange plate 1012 to form the second flow guiding groove 10121, can be arranged outside the case 10. This can effectively reduce the influence of the outwardly protruding structure on the internal space of the case 10, thereby reducing the impact on the assembly of the battery cell 20.

Referring to FIGs. 3 to 6, in some embodiments, the case 10 further includes a cooling nozzle (not shown in the figures). The cooling nozzle includes a nozzle connecting portion formed of a fifth material. The fifth material and the first material are of the same type of material. The nozzle connecting portion is welded to the first welding surface 1011a and communicates with the flow channel 1013.

The cooling nozzle is a valve-type device. The cooling nozzle is configured to enable or disable the flow of the cooling medium and to control the flow rate of water at the inlet and outlet. The cooling nozzle is configured to communicate with the flow channel 1013 so as to control the inflow or outflow of the cooling medium into or from the flow channel.

The nozzle connecting portion is a part of the cooling nozzle configured for welding to the first welding surface 1011a. The nozzle connecting portion is formed of the fifth material, and the fifth material and the first material are of the same type of material. Therefore, in the case where the first material may be a copper alloy or an aluminum alloy, the fifth material may also be a copper alloy or an aluminum alloy. That is, the nozzle connecting portion may be of a copper alloy structure or an aluminum alloy structure.

The cooling nozzle may communicate with any part of the flow channel 1013. Illustratively, the cooling nozzle may communicate with the end part of the flow channel 1013, such that the coolant liquid can flow through the entire flow channel 1013. The number of cooling nozzles may be two or more. Illustratively, when the number of cooling nozzles is two, the two cooling nozzles may be respectively connected to two opposite ends of the flow channel 1013, with one of the cooling nozzles configured for introducing coolant liquid and the other cooling nozzle for discharging coolant liquid.

With such a configuration, the fifth material forming the nozzle connecting portion and the first material forming the first welding surface 1011a are of the same type of material, for example, both are aluminum alloy materials, and the third material forming the third welding surface is also of the same type of material as the first material. Therefore, during the welding procedure, the nozzle connecting portion of the cooling nozzle and the second welding surface 1012a of the heat exchange plate 1012 can be welded integrally, so as to weld the cooling nozzle and the heat exchange plate 1012 onto the composite plate 1011 at the same time. This can optimize the welding and assembly process and reduce the manufacturing procedures of the case 10.

Referring to FIGs. 2 to 6, in some embodiments, the thickness of the first material portion 10111 is denoted as M, where 0.05 millimeter ≤ M ≤ 3 millimeters (hereinafter, "mm" will be used instead of "millimeter" for expression).

It can be understood that the composite plate 1011 is formed by roll-bonding a plurality of metallic materials under mechanical pressure; for example, the composite plate may be constituted by roll-bonding the first material portion 10111 and the second material portion 10112 into a two- or multi-layered material layer. In some specific embodiments, the composite plate 1011 may be roll-bonded into a two-layer composite structure, including a first layer structure formed by the first material portion 10111 and a second layer structure formed by the second material portion 10112. It can be understood that the first welding surface 1011a is formed on the surface of the first layer structure.

The thickness M of the first material portion 10111 is set to be greater than or equal to 0.05 mm to ensure that the first material portion 10111 has sufficient thickness to meet the welding requirements with the heat exchange plate 1012. Meanwhile, the thickness M of the first material portion 10111 is set to be less than or equal to 3 mm, such that while satisfying the welding requirements of the first material portion 10111, the thickness of the first material portion 10111 is controlled to not exceed 3 mm, so as to reduce the material usage of the first material of the first material portion 10111. As a result, the proportion of the lower-cost second material portion 10112 becomes greater, which can effectively reduce the cost of the composite plate 1011, and thus achieve the purpose of reducing the cost of the case 10.

Referring to FIGs. 2 to 6, in some embodiments, the thickness M of the first material portion 10111 is 0.1 mm ≤ M ≤ 1.5 mm.

It can be understood that, to further optimize the connection strength between the composite plate 1011 and the heat exchange plate 1012, as well as to optimize the cost of the composite plate 1011, the thickness M of the first material portion 10111 is set to be greater than or equal to 0.1 mm and less than or equal to 1.5 mm, such that the strength of connection by welding between the first welding surface 1011a formed on the first material portion 10111 and the second welding surface 1012a of the heat exchange plate 1012 can be better, and the cost of the composite plate 1011 can be effectively controlled.

Illustratively, in some specific embodiments, the case 10 includes a frame 102, a composite plate 1011, and a heat exchange plate 1012. The heat exchange plate 1012 is selected as a plate body made of an aluminum material. The composite plate 1011 includes a first material portion 10111 formed of aluminum alloy and a second material portion 10112 formed of steel alloy. Moreover, the first material portion 10111 can form an aluminum layer structure, and the second material portion 10112 can form a steel layer structure, that is, the composite plate 1011 is a steel-aluminum composite plate formed by roll-bonding a steel plate and an aluminum plate, and the first welding surface 1011a is formed on the surface of the aluminum layer structure. Meanwhile, the frame 102 may also be made of a steel-aluminum composite plate material, such that the frame 102 and the composite plate 1011 can be integrally formed by stamping from the same steel-aluminum composite plate raw material. The second welding surface 1012a of the heat exchange plate 1012 is welded to the first welding surface 1011a of the composite plate 1011 to form the bottom plate 101, and the heat exchange plate 1012 and the composite plate 1011 define, in an enclosing manner, a flow channel 1013. The case 10 further includes an aluminum alloy nozzle, which can be welded integrally with the heat exchange plate 1012 onto the first welding surface 1011a of the composite plate 1011, so as to reduce the welding procedures.

Referring to FIGs. 2 and 3, in a second aspect, the embodiments of the present application further provide a battery 100. The battery includes a battery cell 20 and the case 10 described above. The battery cell 20 is accommodated inside the case 10. The battery 100 adopts any one of the cases 10 described in the above embodiments, which will not be repeated here.

Referring to FIGs. 1 and 2, in a third aspect, the embodiments of the present application further provide an electric device. The electric device includes the battery 100 described above. The battery 100 is configured to provide electric energy. The electric device may be any one of the electric devices described in the above embodiments, such as the vehicle 1000, which will not be repeated here.

The above are only preferred embodiments of the present application, and are not intended to limit the present application. Any modification, equivalent substitution, improvement, and the like made within the spirit and principle of the present application shall all fall within the protection scope of the present application.

## Claims

1. A case, configured to accommodate a battery cell, wherein the case comprises:
a bottom plate, the bottom plate comprising a composite plate and a heat exchange plate, wherein the composite plate comprises a first material portion formed of a first material and a second material portion formed of a second material, a first welding surface is formed on a part of a surface of the composite plate, and the first welding surface is formed by the first material portion; a second welding surface is formed on a part of a surface of the heat exchange plate, the heat exchange plate at the second welding surface is formed of a third material, and the third material and the first material are of a same type of material; the first welding surface is welded to the second welding surface.

2. The case according to claim 1, wherein the first material comprises at least one of copper alloy or aluminum alloy.

3. The case according to claim 2, wherein the first material portion comprises a copper alloy layer or an aluminum alloy layer.

4. The case according to any one of claims 1 to 3, wherein the second material comprises steel alloy.

5. The case according to claim 4, wherein the second material portion comprises a steel alloy layer.

6. The case according to any one of claims 1 to 5, wherein the case further comprises a frame, and the frame and the composite plate are integrally formed.

7. The case according to any one of claims 1 to 6, wherein the case further comprises a frame; a third welding surface is formed on a part of a surface of the frame, the frame at the third welding surface is formed of a fourth material, and the fourth material and the first material or the second material are of a same type of material; the third welding surface is welded to the first welding surface.

8. The case according to any one of claims 1 to 7, wherein one side of the composite plate that forms the first welding surface is recessed toward an opposite side to form a first flow guiding groove, and the heat exchange plate covers the first flow guiding groove to form a flow channel.

9. The case according to claim 8, wherein the one side of the composite plate that forms the first welding surface is arranged facing the battery cell.

10. The case according to any one of claims 1 to 7, wherein the heat exchange plate is recessed to form a second flow guiding groove, and the composite plate covers the second flow guiding groove to form a flow channel.

11. The case according to claim 10, wherein the one side of the composite plate that forms the first welding surface is arranged facing away from the battery cell.

12. The case according to any one of claims 8 to 11, wherein the case further comprises a cooling nozzle, and the cooling nozzle comprises a nozzle connecting portion formed of a fifth material; the fifth material and the first material are of the same type of material, and the nozzle connecting portion is welded to the first welding surface and communicates with the flow channel.

13. The case according to any one of claims 1 to 12, wherein a thickness of the first material portion is denoted as M, wherein 0.05 mm ≤ M ≤ 3 mm.

14. The case according to claim 13, wherein the thickness M of the first material portion is 0.1 mm ≤ M ≤ 1.5 mm.

15. A battery, comprising a battery cell and the case according to any one of claims 1 to 14, wherein the battery cell is accommodated inside the case.

16. An electric device, comprising the battery according to claim 15, wherein the battery is configured to provide electric energy.
